# EUROPEAN PATENT SPECIFICATION

(11) **EP 1 578 856 B1**
(45) Date of publication and mention of the grant of the patent: **07.06.2006**
(21) Application number: 03814035.6
(22) Date of filing: 12.12.2003
(51) Int. Cl.: C08K 5/523, C08L 67/02

(54) **FLAME RESISTANT, LASER WELDABLE POLYESTER RESIN COMPOSITION**
FLAMMWIDRIGE, LASERSCHWEISSBARE POLYESTERHARZZUSAMMENSETZUNG
COMPOSITION DE RESINE DE POLYESTER ININFLAMMABLE SOUDABLE AU LASER

(30) Priority: 17.12.2002 US 434153 P
(43) Date of publication of application: 28.09.2005
(73) Proprietor: E.I. DU PONT DE NEMOURS AND COMPANY, Wilmington, DE 19898 (US)
(72) Inventor: SUMI, Hiroyuki, Kawachi-Gun, Tochigi Ken 329-0434 (JP); KOBAYASHI, Toshikazu, Kawachi-Machi, Tochigi 329-1104 (JP)
(74) Representative: Morf, Jan Stefan
(86) International application number: PCT/US2003/040022
(87) International publication number: WO 2004/058869

(56) References cited:
- US-A- 6 133 358
- PATENT ABSTRACTS OF JAPAN vol. 2002, no. 12, 12 December 2002 (2002-12-12) & JP 2002 226684 A (DAINIPPON INK & CHEM INC), 14 August 2002 (2002-08-14)
- PATENT ABSTRACTS OF JAPAN vol. 2000, no. 12, 3 January 2001 (2001-01-03) & JP 2000 256564 A (TORAY IND INC), 19 September 2000 (2000-09-19)

## Description

### Field of the Invention

The present invention relates to a flame resistant and laser weldable polyester resin composition employing a non-halogenated flame retardant. It further relates to a flame and laser weldable resistant polyester resin composition that retains the excellent physical properties and moldability of the base polyester and that is suitable for use in automotive parts, electrical and electronic parts, and machine parts.

### Background of the Invention

Because of their excellent mechanical and electrical insulation properties, thermoplastic polyester resin compositions are used in a broad range of applications such as in automotive parts, electrical and electronic parts, machine parts and the like. However, in many of these applications, it is necessary that the resins used possess flame resistance. This requirement has prompted research into a variety of methods for imparting flame resistance to polyester resins. A common method of imparting flame resistance to thermoplastic polyester resin compositions involves adding a halogenated organic compound as a flame retardant along with an antimony compound that acts as a synergist for the flame retardant. However, the use of halogenated flame retardants has certain drawbacks in that these materials tend to corrode the barrels of compounding extruders, the surfaces of molding machines, and other equipment they come in contact with at elevated temperatures. Some halogenated flame retardants also have detrimental effects on the electrical properties of a compounded polyester resin composition.

Thus, effective non-halogenated flame retardants that do not have a detrimental effect upon a resin's mechanical properties are desirable. For example, Japanese Patent Application H9-143350 discloses a flame resistant polyester resin composition containing a combination of a melamine-cyanurate adduct and a phosphorus containing flame retardant. U.S. Patent 6,133,358 discloses a composition comprising coated red phosphorus and a novolac phenolic polymer in polyester resin compositions. Japanese Patent Application Kokai 2000-256564 discloses a flame resistant thermoplastic resin composition containing red phosphorus, a phenolic polymer, and an amine compound.

The present invention addresses the preparation of a flame resistant polyester resin composition having sufficient flame resistance using a non-halogenated flame retardant and having excellent impact resistance and other mechanical properties.

### Summary of the Invention

There is disclosed and claimed herein a flame resistant, laser-weldable polyester resin composition, comprising:
(A) 10 to 90 weight percent thermoplastic polyester;
(B) 1 to 35 weight percent phosphorus containing flame retardant;
(C) 1 to 25 weight percent phenolic polymer; and
(D) 1 to 25 weight percent thermoplastic acrylic polymer; the above stated percentages being based on the total weight of the components A-D and articles made therefrom.

### Brief Description of the Drawings

Figs. 1, 2 and 3 are a side elevation, top plan view and a perspective view, respectively, of a test piece 11 for measuring weld strength as reported herein.
Fig. 4 is a perspective view of test pieces 11', a relatively transparent object and 11", a relatively opaque object, having their respective faying surfaces in contact and placed in position for a laser welding.

### Detailed Description of the Invention

The composition of the present invention comprises four components. Component (A) is at least one thermoplastic polyester. Component (B) is at least one phosphorus containing flame retardant. Component (C) is at least one phenolic polymer. Component (D) is at least one thermoplastic acrylic polymer.

Any thermoplastic polyester may be used as component (A) of the composition. Mixtures of thermoplastic polyesters and/or thermoplastic polyester copolymers may also be used. The term "thermoplastic polyester" as used herein includes polymers having an inherent viscosity of 0.3 or greater and that are, in general, linear saturated condensation products of diols and dicarboxylic acids, or reactive derivatives thereof. Preferably, they will comprise condensation products of aromatic dicarboxylic acids having 8 to 14 carbon atoms and at least one diol selected from the group consisting of neopentyl glycol, cyclohexanedimethanol, 2,2-dimethyl-1,3-propane diol and aliphatic glycols of the formula HO(CH₂)ₙOH where n is an integer of 2 to 10. Up to 20 mole percent of the diol may be an aromatic diol such as ethoxylated bisphenol A, sold under the tradename Dianol 220 by Akzo Nobel Chemicals, Inc.; hydroquinone; biphenol; or bisphenol A. Up to 50 mole percent of the aromatic dicarboxylic acids can be replaced by at least one different aromatic dicarboxylic acid having from 8 to 14 carbon atoms, and/or up to 20 mole percent can be replaced by an aliphatic dicarboxylic acid having from 2 to 12 carbon atoms. Copolymers may be prepared from two or more diols or reactive equivalents thereof and at least one dicarboxylic acid or reactive equivalent thereof or two or more dicarboxylic acids or reactive equivalents thereof and at least one diol or reactive equivalent thereof. Difunctional hydroxy acid monomers such as hydroxybenzoic acid or hydroxynaphthoic acid or their reactive equivalents may also be used as comonomers.

Preferred polyesters include poly(ethylene terephthalate) (PET), poly(1,4-butylene terephthalate) (PBT), poly(propylene terephthalate) (PPT), poly(1,4-butylene naphthalate) (PBN), poly(ethylene naphthalate) (PEN), poly(1,4-cyclohexylene dimethylene terephthalate) (PCT), and copolymers and mixtures of the foregoing. Also preferred are 1,4-cyclohexylene dimethylene terephthalate/isophthalate copolymer and other linear homopolymer esters derived from aromatic dicarboxylic acids, including isophthalic acid; bibenzoic acid; naphthalenedicarboxylic acids including the 1,5-; 2,6-; and 2,7-naphthalenedicarboxylic acids; 4,4'-diphenylenedicarboxylic acid; bis(*p*-carboxyphenyl) methane; ethylene-bis-*p*-benzoic acid; 1,4-tetramethylene bis(*p*-oxybenzoic) acid; ethylene bis(*p*-oxybenzoic) acid; 1,3-trimethylene bis(*p-*oxybenzoic) acid; and 1,4-tetramethylene bis(*p*-oxybenzoic) acid, and glycols selected from the group consisting of 2,2-dimethyl-1,3-propane diol; neopentyl glycol; cyclohexane dimethanol; and aliphatic glycols of the general formula HO(CH₂)ₙOH where n is an integer from 2 to 10, e.g., ethylene glycol; 1,3-trimethylene glycol; 1,4-tetramethylene glycol;-1,6-hexamethylene glycol; 1,8-octamethylene glycol; 1,10-decamethylene glycol; 1,3-propylene glycol; and 1,4-butylene glycol. Up to 20 mole percent, as indicated above, of one or more aliphatic acids, including adipic, sebacic, azelaic, dodecanedioic acid or 1,4-cyclohexanedicarboxylic acid can be present. Also preferred are copolymers derived from 1,4-butanediol, ethoxylated bisphenol A, and terephthalic acid or reactive equivalents thereof. Also preferred are random copolymers of at least two of PET, PBT, and PPT, and mixtures of at least two of PET, PBT, and PPT, and mixtures of any of the forgoing.

It is particularly preferred to use a poly(ethylene terephthalate) that has an inherent viscosity (IV) of at least about 0.5 at 30 °C in a 3:1 volume ratio mixture of methylene chloride and trifluoroacetic acid. PET with a higher inherent viscosity in the range of 0.80 to 1.0 can be used in applications requiring enhanced mechanical properties such as increased tensile strength and elongation.

The thermoplastic polyester may also be in the form of copolymers that contain poly(alkylene oxide) soft segments. The poly(alkylene oxide) segments are to be present in about 1 to about 15 parts by weight per 100 parts per weight of thermoplastic polyester. The poly(alkylene oxide) segments have a number average molecular weight in the range of about 200 to about 3,250 or, preferably, in the range of about 600 to about 1,500. Preferred copolymers contain poly(ethylene oxide) incorporated into a PET or PBT chain. Methods of incorporation are known to those skilled in the art and can include using the poly(alkylene oxide) soft segment as a comonomer during the polymerization reaction to form the polyester. PET may be blended with copolymers of PBT and at least one poly(alkylene oxide). A poly(alkyene oxide) may also be blended with a PET/PBT copolymer. The inclusion of a poly(alkylene oxide) soft segment into the polyester portion of the composition may accelerate the rate of crystallization of the polyester. The thermoplastic polyester should be present in about 10 to about 90 weight percent based on the total weight of the composition.

Component (B) of the composition of the present invention is at least one phosphorus containing flame retardant. The phosphorus containing flame retardant may be organic or inorganic. Suitable inorganic flame retardants include, but are not limited to, red phosphorus and aluminum and zinc phosphinate salts. Suitable organic phosphorus containing flame retardants include phosphonates, phosphates, and oligomeric and polymeric phosphates. The phosphorus containing flame retardant should be present in about 1 to about 25 weight percent based on the total weight of the composition, and preferably about 5 to about 20 weight percent based on the total weight of the composition. If less than 5 weight percent is used, the composition will not achieve a V-0 rating as measured by UL Test No. UL-94 (20 mm Vertical Burning Test). If greater than 25 weight percent is used, the mechanical properties of the composition will be adversely affected.

Preferred flame retardants are oligomeric aromatic phosphate esters of the general formula (I): 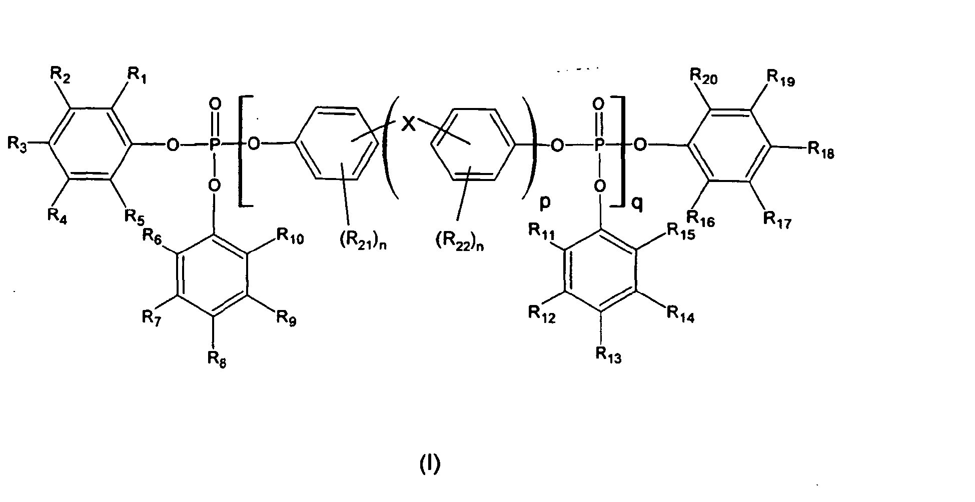 wherein R₁-R₂₂ are independently a hydrogen atom or an alkyl group having 1 to 4 carbon atoms, such as methyl, ethyl, *n*-propyl, *l*-propyl, or *tert*-butyl; X is a bond, - CH₂-, --C(CH₃)₂--, --S--, --SO₂--, --O-, --CO--, or --N=N--; n is 0, 1, 2, 3, or 4; p is 0 or 1; and q is an integer between 1 and 16, inclusive.

A more preferred oligomeric aromatic phosphate ester is resorcinol bis(di-2,6-xylyl)phosphate (which is described in Japanese Kokai H9-143350, and is a low cost product marketed under the name PX-200 by Daihachi Chemicals Co., Japan), shown in formula (II), and other preferred aromatic phosphate esters are shown in formulas (III) and (IV).

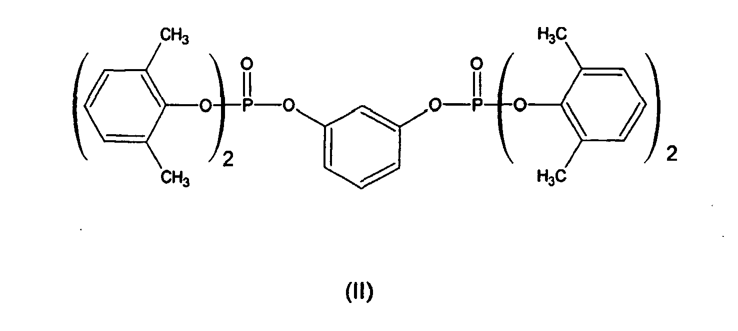

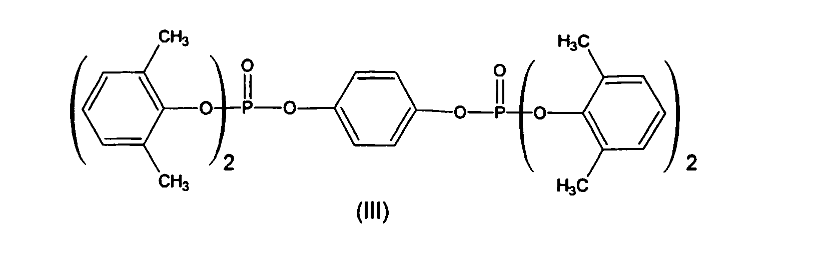

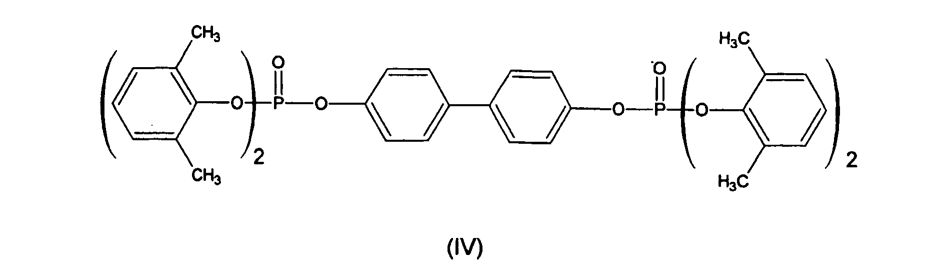

Component (C) of the present invention is a phenolic polymer. There is no particular limitation as to the phenolic polymer used in the invention; any of those available on the market may be used. The phenolic polymer may include novolacs or resols. These may be partially or fully cured by heating and/or the use of cross-linking agents. Preferred are novolacs. More preferred are novolacs that do not have added cross-linking agents and are not heat reactive. There is no particular limitation as to the form to be used: pulverized, granular, flake, powder, acicular, liquid, and other forms are suitable. The phenolic polymer may be used as a blend of two or more types.

One method of preparing a novolac is by charging at least one phenol and at least one aldehyde at a molar ratio in the range of about 1:0.7 to about 1:0.9 to a reactor; adding a catalyst such as oxalic acid, hydrochloric acid, sulfuric acid, toluene sulfonic acid, and the like; heating at reflux reaction for a designated time; removing the water generated by dehydration with a vacuum or by settling; and removing any residual water and unreacted monomers. One method of preparing a resol is by charging at least one phenol and at least one aldehyde at a molar ratio in the range of about 1:1 to about 1:2 to a reactor; adding a catalyst such sodium hydroxide, aqueous ammonia, or other basic material; heating at reflux reaction for a designated time; removing the water generated by dehydration with a vacuum or by settling; and removing any residual water and unreacted monomers. Suitable phenols include phenol, *o*-cresol, *m*-cresol, *p*-cresol, thymol, *p*-tert-butyl phenol, *tert-*butyl catechol, catechol, isoeugenol, o-methoxy phenol, 4,4'-dihydroxy phenyl-2,2-propane, isoamyl salicylate, benzyl salicylate, methyl salicylate, 2,6-di-*tert*-butyl-*p*-cresol, and the like. More than one phenol may be used in the preparation of the phenolic polymer. Suitable aldehydes and aldehyde precusors include formaldehyde, paraformaldehyde, polyoxymethylene, trioxane, and the like. More than one aldehyde and/or phenol may be used in the preparation of the phenolic polymer. The phenolic polymer used in this invention should have a weight loss of preferably not more than 50%, and more preferably not more than 40%, when a sample of about 10 mg of powdered polymer is heated at a rate of 40 °C/min in air to 500 °C in a simultaneous differential thermal and thermogravimetric measurement device (such as the TG/DTA-200 made by Seiko Electronics Industry Co.).

There is no particular limitation as to the molecular weight of the phenolic polymer. Preferably it has a number average molecular weight of about 200 to about 2,000, or more preferably about 400 to about 1,500. The molecular weight of the phenolic polymer can be determined by gel permeation chromatography using a tetrahydrofuran solution against a polystyrene standard sample.

In the present invention, the amount of phenolic polymer used should be about 1 to about 25 weight percent based on the total weight of the composition or, preferably, about 2 to about 20 weight percent based on the total weight of the composition or, more preferably, about 3 to about 15 weight percent based on the total weight of the composition. The phenolic polymer provides the composition with good flame resistance, surface appearance, and improved melt flow properties.

Component (D) of the present invention is a thermoplastic acrylic polymer. The thermoplastic acrylic polymers are polymers derived from acrylic acid, acrylate esters (such as methyl acrylate, *n*-propyl acrylate, isopropyl acrylate, *n*-butyl acrylate, *n*-hexyl acrylate, and *n*-octyl acrylate), methacrylic acid, and methacrylate esters (such as methyl methacrylate, *n*-propyl methacrylate, isopropyl methacrylate, *n*-butyl methacrylate (BA), isobutyl methacrylate, n-amyl methacrylate, *n*-octyl methacrylate, glycidyl methacrylate (GMA) and the like). Copolymers derived from two or more of the forgoing types of monomers may also be used, as well as copolymers derived from one or more of the forgoing types of monomers with styrene, acryonitrile, butadiene, isoprene, and the like. Part or all of the components in these copolymers should preferably have a glass transition temperature of not higher than 0 °C. Preferred monomers are for the preparation of the acrylic polymer are methyl acrylate, *n*-propyl acrylate, isopropyl acrylate, *n*-butyl acrylate, *n*-hexyl acrylate, and *n*-octyl acrylate.

The amount of acrylic polymer used in this invention should be about 1 to about 25 weight based on the total weight of the composition, or, preferably, about 2 to about 20 weight percent based on the total weight of the composition, or, more preferably, about 3 to about 15 weight percent based on the total weight of the composition. The polymer can inhibit a loss in toughness in the composition caused by the flame retardant and phenolic polymer, thereby providing the composition with good impact strength.

It is preferred that the acrylic polymer have a core-shell structure. The core-shell structure is one in which the core portion preferably has a glass transition temperature of 0 °C or less, while the shell portion is preferably has a glass transition temperature higher than that of the core portion. The core portion may be grafted with silicone. The shell section may be grafted with a low surface energy substrate such as silicone, fluorine, and the like. An acrylic polymer with a core-shell structure that has low surface energy substrates grafted to the surface will aggregate with itself during or after mixing with the thermoplastic polyester, flame retardant, and/or phenolic polymer of the composition of the invention and can be easily uniformly dispersed in the composition.

In addition, it is permissible in this invention to blend in up to about 120 parts by weight of at least one inorganic reinforcing agent per 100 parts by weight of components (A), (B), (C), and (D) combined. The inorganic reinforcing agents may include known reinforcing agents such as glass fibers, mica, whiskers, talc, calcium carbonate, synthetic resin fibers, and the like. Addition of an inorganic reinforcing agent in an amount exceeding 120 parts by weight will give molded articles that are warped and have a poor surface appearance.

The polyester resin composition of this invention may optionally include a plasticizer such as poly(ethylene glycol) 400 bis(2-ethyl hexanoate), methoxypoly(ethylene glycol) 550 (2-ethyl hexanoate), and tetra(ethylene glycol) bis(2-ethyl hexanoate), and the like. The composition of this invention may also optionally include a nucleating agent such as a sodium or potassium salt of a carboxylated organic polymer, the sodium salt of a long chain fatty acid, sodium benzoate, and the like. Part or all of the polyester may be replaced with a polyester at least some of whose end groups have been neutralized with sodium or potassium. The polyester resin composition of this invention may also include, in addition to the above components, additives such as a heat stabilizer, antioxidant, dye, pigment, mold release, UV stabilizer, and the like, provided that they don't negatively impact the physical properties or flame resistance of the composition.

The compositions of the present invention are in the form of a melt-mixed blend, wherein all of the polymeric components are well-dispersed within each other and all of the non-polymeric ingredients are homogeneously dispersed in and bound by the polymer matrix, such that the blend forms a unified whole. The blend may be obtained by combining the component materials using any melt-mixing method. The component materials may be mixed to homogeneity using a melt-mixer such as a single or twin-screw extruder, blender, kneader, Banbury mixer, etc. to give a resin composition. Or, part of the materials may be mixed in a melt-mixer, and the rest of the materials may then be added and further melt-mixed until homogeneous. The sequence of mixing in the manufacture of the flame resistant polyester resin composition of this invention may be such that individual components may be melted in one shot, or the filler and/or other components may be fed from a side feeder, and the like, as will be understood by those skilled in the art.

The composition of the present invention may be formed into articles using methods known to those skilled in the art, such as, for example, injection molding. Such articles can include those for use in electrical and electronic applications, mechanical machine parts, and automotive applications. Articles for use in applications that require high degrees of flame resistance are preferred. Articles formed from the compositions of the present invention may be in the form of parts that can be laser welded to other polymeric parts to form further articles, such as electrical and electronic housings and parts for office equipment such as printers, fax machines, etc.

### Examples

The components shown in Tables 1 were premixed for 20 minutes in a tumbler and melt mixed using a twin screw extruder (Toshiba TEM35B) at a temperature of 270 °C to give a resin composition. Exiting the extruder, the polymer was passed through a die to form strands that were frozen in a quench tank and subsequently chopped to make pellets.

The resultant resin compositions were used to mold 13 mm x 130 mm x 3.2 mm test pieces according to ASTM D638. The test pieces were used to measure mechanical properties. The following test procedures were used:

| | |
|---|---|
| Tensile strength: | ASTM D638-58T |
| Elongation at break: | ASTM D638-58T |
| Flexural modulus and strength: | ASTM D790-58T |
| Notched and unnotched Izod impac strength: | ASTM D256 |
| Heat deflection temperature (HTD): | ASTM D648 |

Flame resistance testing was done according to UL Test No. UL-94 (20 mm Vertical Burning Test) using 1/16^{th} inch (referred to in the Table as 1.6 mm) thick test pieces.

Aging experiments were done by conditioning test bars at 120 °C for 6 weeks. Tensile strength and elongation testing was then done on these bars using the methods cited above.

Melt viscosities were measured on a Capirograph rheometer (made by Toyo Seiki Co.) at a shear rate of 1000 s⁻¹.

Weight loss experiments were done by heating a sample of pellets to the temperature specified in Table 1 at a rate of 10 °C/min in a thermogravimetric analysis instrument (TGA) in air and holding the sample at the specified temperature for one hour and measuring the resulting weight loss.

### Laser Weld Strength

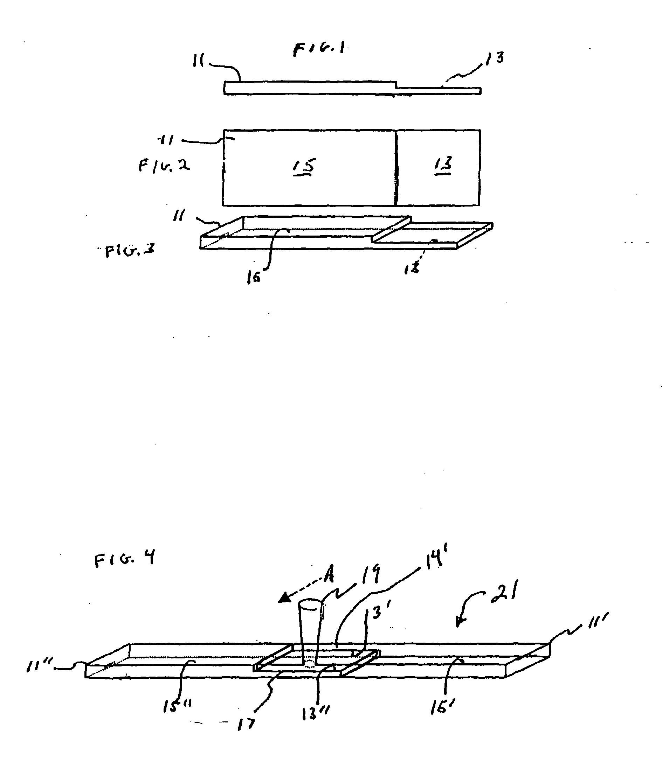

Referring now to the drawings and in particular Fig. 1 - 3, there is disclosed the geometry of the test pieces 11 used to measure weld strength as reported herein. The test pieces 11 are generally rectangular in shape, having dimensions of 70 mm X 18 mm X 3 mm and a 20 mm deep half lap at one end. The half lap defines a faying surface 13 and a shoulder 15.

Referring now to Fig. 4, there is illustrated a pair of test pieces, 11' and 11", that are, respectively, a relatively transparent polymeric object and a relatively opaque polymeric object. The faying surfaces 13' and 13" of pieces 11' and 11" have been brought into contact so as to form a juncture 17 therebetween. Relatively transparent piece 11' defines an impinging surface 14' that is impinged by laser radiation 19 moving in the direction of arrow A. Laser radiation 19 passes through relatively transparent piece 11' and irradiates the faying surface 13" of relatively opaque piece 11", causing pieces 11' and 11" to be welded together at juncture 17, thus forming a test bar, shown generally at 21.

In accordance with the invention, the composition disclosed in Example 3 was dried and molded into test pieces that were conditioned at 23 °C and 65% relative humidity for 24 hours. By way of comparison (as disclosed in Comparative Examples 3 and 4) compositions outside the scope of the present invention were also molded into test pieces, 11. A relatively opaque composition, made from Rynite® 530 BK, a 30% glass reinforced PET containing carbon black manufactured by E.I. DuPont de Neumours, Inc. Wilmington, DE, was similarly dried and molded into test pieces 11". Test pieces 11' and 11" and test pieces 11 and 11" were then welded together as described above, with a clamped pressure of 0.3 MPa therebetween to form test bars 21. Laser radiation was scanned in a single pass across the width of test pieces 11' and 11 at 200 cm/min with a Rofin-Sinar Laser GmbH 940 nm diode laser operating at 160 W. The test bars were further conditioned for 24 hours at 23 °C and 65% relative humidity. The force required to separate test pieces 11' and 11" and 11 and 11" was determined using an Instron® tester clamped at the shoulder of the test bars, applying tensile force in the longitudinal direction of the test bars 21. The Instron® tester was operated at a rate of 2 mm/min. The results are given in Table 1.
The following terms are used in Table 1:
PET refers to a poly(ethylene terephthalate) with an inherent viscosity of about 0.67 manufactured by E.I. du Pont de Nemours and Co.
PX-200 refers to resorcinol bis(di-2,6-xylyl)phosphate manufactured by Daihachi Chemicals Co.
Phenolic polymer refers to Novolac HRJ12700CP manufactured by Schenectady International, Inc.
Acrylic polymer refers to Metablen S-2001, a core-shell polymer with a core of a poly(butyl acrylate) grafted with silicone and a shell of poly(methyl methacrylate) manufactured by Mitsubishi Rayon Co., Ltd.
Halogenated FR refers to a brominated polystyrene flame retardant.
Sodium antimonate refers to a masterbatch of 35 weight percent sodium antimonate in 65 weight percent Surlyn® 8920.
Surlyn® 8920 refers to a sodium neutralized ethylene/methacrylic acid copolymer manufactured by E.I. DuPont de Neumours, Inc.
Antimony trioxide refers to a masterbatch of 30 weight percent antimony trioxide in 70 weight percent polyamide 6,6.
Lionon DEH-40 refers to poly(ethylene glycol) bis(2-ethylhexanoate) manufactured by Lion Co.
Licowax PED521 refers to an oxidized polyethylene manufactured by Clariant, Inc.
Licolub WE40 is a montanic acid ester supplied as a powder by Clariant, Inc.
Epikote 1009 refers to an epichlorohydrin/bisphenol A condensation product manufactured by Japan Epoxy Resin.
Irganox 1010 refers to an antioxidant manufactured by Ciba Specialty Chemicals, Inc.
Carbon black refers to Cabot PE3324, which is carbon black in a polyethylene carrier manufactured by Cabot Corp.
CS FT689 refers to glass fibers manufactured by Asahi Fiberglass Co., Ltd.
JA FT592 refers to chopped glass fibers manufactured by Asahi Fiberglass Co., Ltd.

In Example 1, a polyester melt-mixed with a phenolic novolac polymer and an acrylic polymer in combination with a phosphorus containing flame retardant and other ingredients provides a flame resistance composition that has good mechanical and physical properties. A comparison with Comparative Example 1 indicates that the halogen-free flame retarded composition of the present invention has physical and mechanical properties that are comparable to those of a composition containing a traditional brominated polystyrene flame retardant. In addition, the composition of Example 1 has a lower melt viscosity than that of Comparative Example 1.

Example 2 and Comparative Example 2 demonstrate the importance of using the acrylic polymer in the present invention. This ingredient is present in Example 1 and missing in Comparative Example 2 and the composition of Example 1 is tougher than that of Comparative Example 2, as evidenced by the Izod and notched Izod impact testing results.

Example 3 demonstrates that the compositions of the present invention may be laser welded to a relatively opaque material with a good weld strength and have V-0 flame resistance. Comparative Example 3 contains a traditional brominated polystyrene flame retardant and can be laser welded to a relatively opaque material with a good weld strength, but without a synergist the composition is not flame resistant and fails the UL-94 test. Comparative Example 4 contains a traditional brominated polystyrene flame retardant and an antimony trioxide synergist and has V-0 flame resistance. However, it is not possible to laser weld this material.

**Table 1**

| | Ex.1 | Comp. Ex.1 | Ex. 2 | Comp. Ex.2 | Ex. 3 | Comp. Ex.3 | Comp. Ex.4 |
|---|---|---|---|---|---|---|---|
| PET | 35.1 | 46.4 | 33.6 | 39.6 | 41.1 | 55.1 | 53.4 |
| PX-200 | 13.0 | - | 14 | 14 | 15 | - | - |
| Phenolic polymer | 8.0 | - | 8 | 8 | 8 | - | - |
| Acrylic polymer | 6.0 | - | 6 | - | 5 | - | - |
| Halogenated FR | - | 12.8 | - | - | - | 14 | 14 |
| Sodium antimonate | - | 3.4 | - | - | - | - | - |
| Antimony trioxide | - | - | - | - | - | - | 1.7 |
| Sodium montanate | 0.1 | - | 0.3 | 0.3 | 0.1 | 0.1 | 0.1 |
| Surlyn® 8920 | - | 2.2 | - | - | - | - | - |
| Lionon DEH-40 | - | 2.3 | - | - | - | - | - |
| Pentaerythritol tetrastearate | 1.0 | - | - | - | 0.6 | 0.6 | 0.6 |
| Licowax PED521 | - | 1.3 | 1.0 | 1.0 | - | - | - |
| Licolub WE40 | - | - | 0.3 | 0.3 | - | - | - |
| Epikote 1009 | 0.6 | 0.6 | 0.6 | 0.6 | - | -- | - |
| Irganox 1010 | 0.2 | 0.3 | 0.2 | 0.2 | 0.2 | 0.2 | 0.2 |
| Carbon black | 1.0 | 0.7 | 1.0 | 1.0 | - | - | - |
| CS FT689 | 35.0 | 30.0 | - | - | 30 | 30 | 30 |
| JA FT592 | - | - | 35 | 35 | - | - | - |
| Tensile strength (MPa) | 125 | 140 | 126 | 132 | - | - | - |
| Elongation at break (%) | 2.2 | 2.3 | 2.2 | 1.8 | - | - | - |
| Flexural strength (MPa) | 195 | 210 | 184 | 191 | - | - | - |
| Flexural modulus (MPa) | 10600 | 10300 | 10293 | 11552 | - | - | - |
| Notched Izod impact strength (J/m) | 77 | 82 | 86 | 76 | - | - | - |
| Unnotched Izod impact strength (J/m) | n/m | n/m | 706 | 384 | - | - | - |
| Flame resistance (1.6 mm) | V-0 | V-0 | V-1 | V-1 | V-0 | Fails | V-0 |
| Tensile strength after aging (MPa) | 124 | 138 | n/m | n/m | - | - | - |
| Elongation after aging (%) | 1.7 | 1.9 | n/m | n/m | - | - | - |
| Heat deflection temperature (°C) | 204 | 222 | 214 | 203 | - | - | - |
| Weight loss at 270 °C (%) | 1.85 | n/m | n/m | n/m | - | - | - |
| Weight loss at 260 °C (%) | n/m | n/m | 1.37 | 1.48 | - | - | - |
| Melt viscosity at 270 °C (Pa-s) | 152 | n/m | 83 | 64 | - | - | - |
| Melt viscosity at 260 °C (Pa-s) | n/m | 250 | n/m | n/m | - | - | - |
| Laser weld strength (Kgf) | - | - | - | - | 80 | 79 | 0 |

| | | | | | | | |
|---|---|---|---|---|---|---|---|
| N/m means not measured. | | | | | | | |
| All ingredient quantities are given in weight percent relative to the total weight of the composition. | | | | | | | |

## Claims

1. A flame resistant, laser weldable polyester resin composition, comprising:
(A) 10 to 90 weight percent thermoplastic polyester;
(B) 1 to 35 weight percent phosphorus containing flame retardant;
(C) 1 to 25 weight percent phenolic polymer; and
(D) 1 to 25 weight percent thermoplastic acrylic polymer;
the above stated percentages being based on the total weight of the components A-D and articles made therefrom.

2. The polyester resin composition of Claim 1, further comprising up to about 120 parts by weight of an inorganic reinforcing agent per 100 parts by weight of the sum of the said components (A), (B), (C), and (D).

3. The polyester resin composition of Claim 1 wherein said phenolic polymer is a novolac.

4. The polyester resin composition of Claim 2 wherein said phenolic polymer is a novolac.

5. The polyester resin composition of Claim 1 wherein the phosphorus containing flame retardant is an oligomeric aromatic phosphate ester.

6. The polyester resin composition of Claim 5 wherein the-oligomeric aromatic phosphate ester is resorcinol bis(di-2,6-xylyl)phosphate.

7. The polyester resin composition of Claim 2 wherein the phosphorus containing flame retardant is an oligomeric aromatic phosphate ester.

8. The polyester resin composition of Claim 7 wherein the-oligomeric aromatic phosphate ester is resorcinol bis(di-2,6-xylyl)phosphate.

9. The polyester resin composition of Claim 3 wherein the phosphorus containing flame retardant is an oligomeric aromatic phosphate ester.

10. The polyester resin composition of Claim 9 wherein the-oligomeric aromatic phosphate ester is resorcinol bis(di-2,6-xylyl)phosphate.

11. The polyester resin composition of Claim 4 wherein the phosphorus containing flame retardant is an oligomeric aromatic phosphate ester.

12. The polyester resin composition of Claim 11 wherein the-oligomeric aromatic phosphate ester is resorcinol bis(di-2,6-xylyl)phosphate.

13. The polyester resin composition of Claim 1 wherein said thermoplastic polyester is selected from the group consisting of poly(ethylene terephthalate) (PET), poly(1,4-butylene terephthalate) (PBT), poly(propylene terephthalate) (PPT), copolymers of at least two of PET, PBT, and PPT, mixtures of at least two of PET, PBT, and PPT, and mixtures of any of the forgoing.

14. The polyester resin composition of Claim 1 wherein a part or whole of component (d) has a glass transition temperature of not higher than 0 °C.

15. The polyester resin composition of Claim 1 wherein component (d) has a core-shell structure.

16. An molded article comprising the polyester resin composition of Claim 1.

17. A laser welded article comprising the polyester resin composition of Claim 8.

## Patentansprüche

1. Flammhemmende, laserschweißbare Polyesterharzzusammensetzung, aufweisend:
(A) 10% bis 90 Gew.% thermoplastischen Polyester;
(B) 1 % bis 35 Gew.% Phosphor enthaltendes Flammschutzmittel;
(C) 1% bis 25 Gew.% phenolisches Polymer;
(D) 1% bis 25 Gew.% thermoplastisches, acrylisches Polymer;
wobei die vorgenannten Prozentangaben auf das Gesamtgewicht der Komponenten A bis D bezogen sind; sowie daraus erzeugte Artikel.

2. Polyesterharzzusammensetzung nach Anspruch 1, ferner aufweisend bis zu etwa 120 Gewichtsteile eines anorganischen Verstärkungsmittels pro 100 Gewichtsteile der Summe der Komponenten (A), (B), (C) und (D).

3. Polyesterharzzusammensetzung nach Anspruch 1, worin das phenolische Polymer ein Novolak ist.

4. Polyesterharzzusammensetzung nach Anspruch 2, worin das phenolische Polymer ein Novolak ist.

5. Polyesterharzzusammensetzung nach Anspruch 1, worin das Phosphor enthaltende Flammschutzmittel ein oligomerer, aromatischer Phosphatester ist.

6. Polyesterharzzusammensetzung nach Anspruch 5, worin der oligomere, aromatische Phosphatester Resorcin-bis(di-2,6-xylyl)phosphat ist.

7. Polyesterharzzusammensetzung nach Anspruch 2, worin das Phosphor enthaltende Flammschutzmittel ein oligomerer, aromatischer Phosphatester ist.

8. Polyesterharzzusammensetzung nach Anspruch 7, worin der oligomere, aromatische Phosphatester Resorcin-bis(di-2,6-xylyl)phosphat ist.

9. Polyesterharzzusammensetzung nach Anspruch 3, worin das Phosphor enthaltende Flammschutzmittel ein oligomerer, aromatischer Phosphatester ist.

10. Polyesterharzzusammensetzung nach Anspruch 9, worin der oligomere, aromatische Phosphatester Resorcin-bis(di-2,6-xylyl)phosphat ist.

11. Polyesterharzzusammensetzung nach Anspruch 4, worin das Phosphor enthaltende Flammschutzmittel ein oligomerer, aromatischer Phosphatester ist.

12. Polyesterharzzusammensetzung nach Anspruch 11, worin der oligomere, aromatische Phosphatester Resorcin-bis(di-2,6-xylyl)phosphat ist.

13. Polyesterharzzusammensetzung nach Anspruch 1, worin der thermoplastische Polyester ausgewählt ist aus der Gruppe, bestehend aus: Poly(ethylenterephthalat) (PET), Poly(1,4-butylentherephthalat) (PBT), Poly(propylenterephthalat) (PPT), Copolymeren von mindestens zwei von PET, PBT und PPT, Mischungen von mindestens zwei von PET, PBT und PPT sowie Mischungen von beliebigen der Vorgenannten.

14. Polyesterharzzusammensetzung nach Anspruch 1, worin ein Teil oder die gesamte Komponente (D) eine Glasübergangstemperatur von nicht höher als 0°C hat.

15. Polyesterharzzusammensetzung nach Anspruch 1, worin die Komponente (D) eine Kern/Mantel-Struktur hat.

16. Formartikel, aufweisend die Polyesterharzzusammensetzung nach Anspruch 1.

17. Lasergeschweißter Artikel, aufweisend die Polyesterharzzusammensetzung nach Anspruch 8.

## Revendications

1. Composition de résine polyester ignifuge soudable au laser, qui comprend :
(A) de 10 à 90 pour cent en poids d'un polyester thermoplastique;
(B) de 1 à 35 pour cent en poids d'un retardateur de flamme contenant du phosphore;
(C) de 1 à 25 pour cent en poids d'un polymère phénolique; et
(D) 1 à 25 pour cent en poids d'un polymère acrylique thermoplastique;
les pourcentages susmentionnés étant exprimés en fonction du poids total des composants A-D, et articles produits à partir de ceux-ci.

2. Composition de résine polyester selon la revendication 1, qui comprend également jusqu'à 120 parties en poids environ d'un agent renforçant inorganique pour 100 parties en poids de la somme desdits composants (A), (B), (C) et (D).

3. Composition de résine polyester selon la revendication 1, où ledit polymère phénolique est un novolac.

4. Composition de résine polyester selon la revendication 2, où ledit polymère phénolique est un novolac.

5. Composition de résine polyester selon la revendication 1, où ledit retardateur de flamme contenant du phosphore est un ester de phosphate aromatique oligomère.

6. Composition de résine polyester selon la revendication 5, où ledit ester de phosphate aromatique oligomère est le bis(di-2,6-xylyl)phosphate de résorcinol.

7. Composition de résine polyester selon la revendication 2, où ledit retardateur de flamme contenant du phosphore est un ester de phosphate aromatique oligomère.

8. Composition de résine polyester selon la revendication 7, où ledit ester de phosphate aromatique oligomère est le bis(di-2,6-xylyl)phosphate de résorcinol.

9. Composition de résine polyester selon la revendication 3, où ledit retardateur de flamme contenant du phosphore est un ester de phosphate aromatique oligomère.

10. Composition de résine polyester selon la revendication 9, où ledit ester de phosphate aromatique oligomère est le bis(di-2,6-xylyl)phosphate de résorcinol.

11. Composition de résine polyester selon la revendication 4, où ledit retardateur de flamme contenant du phosphore est un ester de phosphate aromatique oligomère.

12. Composition de résine polyester selon la revendication 11, où ledit ester de phosphate aromatique oligomère est le bis(di-2,6-xylyl)phosphate de résorcinol.

13. Composition de résine polyester selon la revendication 1, où ledit polyester thermoplastique est sélectionné parmi le groupe consistant en le poly(téréphtalate d'éthylène) (PET), le poly(téréphtalate de 1,4-butylène) (PBT), le poly(téréphtalate de propylène) (PPT), des copolymères de deux au moins de ces composés, des mélanges de deux au moins des composés PET, PBT et PPT et des mélanges de n'importe quels composés précités.

14. Composition de résine polyester selon la revendication 1, où une partie ou la totalité du composant (D) a une température de transition vitreuse qui ne dépasse pas 0°C.

15. Composition de résine polyester selon la revendication 1, où ledit composant (D) a une structure de type coeur-enveloppe (« core-shell »).

16. Article moulé comprenant la composition de résine polyester selon la revendication 1.

17. Article soudé au laser comprenant la composition de résine polyester selon la revendication 8.
